# FASCICULE DE BREVET EUROPEEN

(11) **EP 3 119 179 B1**
(45) Date de publication et mention de la délivrance du brevet: **08.05.2019**
(21) Numéro de dépôt: 15712576.6
(22) Date de dépôt: 19.03.2015
(51) Int. Cl.: A01C 1/02, A01G 31/02

(54) **DISPOSITIF DE GERMINATION DE GRAINES**
SAATKEIMUNGSVORRICHTUNG
DEVICE FOR GERMINATION OF SEEDS

(30) Priorité: 19.03.2014 FR 1452254; 19.03.2014 CN 201420124972 U
(43) Date de publication de la demande: 25.01.2017
(73) Titulaire: Innobiz, 34830 Jacou (FR)
(72) Inventeur: THURET, Pierre-Emmanuel, 34830 Jacou (FR); GERARD, Pierre, 34170 Castelnau Le Lez (FR)
(74) Mandataire: Be IP
(86) Numéro de dépôt international: PCT/EP2015/055767
(87) Numéro de publication internationale: WO 2015/140245

(56) Documents cités:
- WO-A1-2006/013853
- CN-A- 102 265 781
- CN-U- 201 797 826
- US-A- 5 136 804
- US-A1- 2012 279 126

## Description

### DOMAINE TECHNIQUE

La présente invention concerne le domaine technique général de la germination de graines, notamment en vue de leur consommation.

### PRESENTATION DE L'ART ANTERIEUR

Les graines germées sont des graines que l'on a fait germer, en général hors-sol, à des fins d'alimentation, de boisson ou de préparation de semis.

On connaît déjà des appareils, voir par exemple CN 102 265 781 A, dans lesquels des graines sont, en vue de provoquer leur germination, soumises à un traitement qui consiste essentiellement à :
- humidifier les graines en projetant des gouttes d'eau sur celles-ci, et à
- aérer les graines.

La durée de ce traitement peut varier en fonction de la vitesse de germination des graines.

Un inconvénient de ces appareils est qu'ils n'assurent pas une homogénéité suffisante du traitement dans la masse de graines.

Ainsi, on constate en fin de traitement des différences pouvant être importantes dans l'état de germination des graines.

Un but de la présente invention est de proposer un dispositif pour la germination de graines destinées à être consommées, ce dispositif permettant de réaliser une germination plus homogène des graines de sorte à augmenter le rendement de graines germées présentant un même stade de germination.

### RESUME DE L'INVENTION

A cet effet, l'invention propose un dispositif de germination selon la revendication 1.

Des aspects préférés mais non limitatifs du dispositif de germination de graines selon l'invention sont les suivants :
- le nébuliseur comprend un bac en aval du réservoir et un élément à ultrasons s'étendant dans le bac, le réservoir et le bac étant connectés par une canalisation de sortie,
- le nébuliseur comprend un ventilateur,
- le canal est disposé au droit du nébuliseur,
- chaque conduite s'étend en saillie du canal en s'éloignant du nébuliseur,
- chaque conduite est de forme tubulaire oblongue,
- le dispositif comprend en outre une cuve de récupération des eaux usées, ladite cuve étant connectée à la gouttière,
- chaque logement comporte un fond et des parois latérales opaques, chaque logement étant associé à un capot amovible opaque destiné à coiffer ledit logement,
- le fond de chaque logement s'étend sensiblement dans un plan, par exemple horizontal,
- le dispositif comprend une pluralité de logements disposés au droit les uns des autres,
- le dispositif comprend en outre un pupitre de commande pour le paramétrage d'un cycle de germination.

### BREVE DESCRIPTION DES FIGURES

D'autres avantages et caractéristiques du dispositif pour la germination de graines ressortiront encore de la description qui va suivre de plusieurs variantes d'exécution, données à titre d'exemples non limitatifs, à partir des dessins annexés sur lesquels :
- La figure 1 est une représentation en perspective d'un germoir pour la germination de graines,
- La figure 2 est une vue éclatée de différentes pièces du germoir illustré à la figure 1,
- La figure 3 est une vue en coupe d'un autre exemple de germoir selon l'invention,
- La figure 4 est une vue en perspective d'un filtre du germoir,
- La figure 5 est une vue en perspective d'une colonne, du filtre et d'un logement du germoir avant positionnement du logement sur le filtre,
- La figure 6 est une vue en perspective de la colonne, du filtre et du logement après positionnement du logement sur le filtre.

### DESCRIPTION DETAILLEE

On va maintenant décrire un exemple de dispositif de germination de graines (appelé dans la suite *« germoir »*) en référence aux figures. Dans les différentes figures, les éléments équivalents portent les mêmes références numériques.

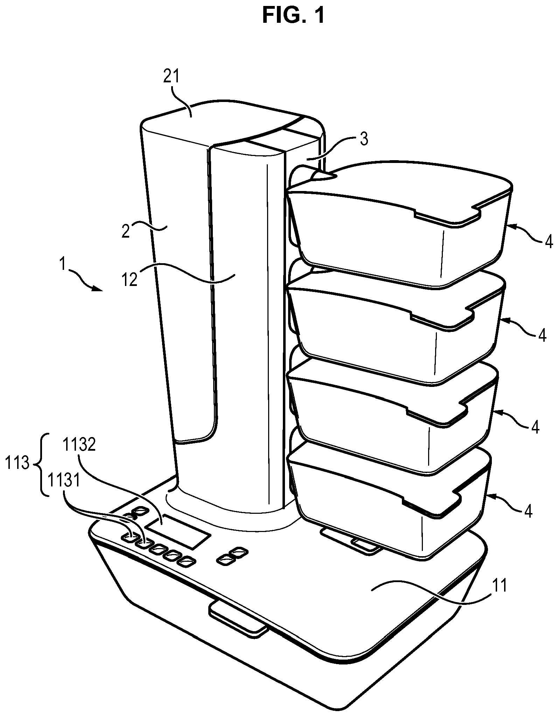

En référence à la figure 1, le germoir comprend une embase 1 supportant un réservoir d'eau 2, un filtre et un (ou plusieurs) logement(s) 4 contenant des graines à faire germer.

L'embase support est composée d'un socle 11 et d'une colonne 12 s'étendant verticalement. Un nébuliseur 111 est logé dans le socle 11 pour générer une brume de particules d'eau.

Le filtre permet de retenir les particules d'eau de taille particulaire supérieure à 100 micromètres, de préférence supérieure à 5 micromètres et encore plus préférentiellement supérieure à 100 nanomètres.

Le germoir permet d'humidifier des graines pour les hydrater et induire leur germination.

L'utilisation d'une brume de particules d'eau de taille inférieure à 100 micromètres (de préférence inférieure à 5 micromètres, et encore plus préférentiellement inférieure à 100 nanomètres) permet une meilleure répartition de l'eau sur les graines par une sursaturation de l'air en eau.

Ceci entraine une humidification plus homogène des graines de sorte à augmenter le rendement de graines germées présentant un même stade de germination.

### Réservoir

Le réservoir 2 est destiné à contenir de l'eau pour permettre l'humidification des graines. Ce réservoir 2 a une contenance de l'ordre de un à trois litres, ce qui permet une autonomie en eau du germoir comprise entre environ trois jours et une semaine.

En effet, la production d'une brume de particules d'eau permet au germoir de consommer environ trente-trois centilitres d'eau par jour pour hydrater les graines lorsque les germoirs automatiques de l'art antérieurs utilisent entre deux et trois litres d'eau par jour pour hydrater les graines.

De préférence, le réservoir 2 est transparent. Ceci permet à l'utilisateur du germoir de vérifier la quantité d'eau contenue dans le réservoir 2.

Le réservoir 2 est fermé dans sa partie supérieure 21. Le réservoir 2 comprend une canalisation de sortie 22 dans sa partie inférieure pour le passage de l'eau entre le réservoir 2 et le nébuliseur 111 contenu dans le socle 11 de l'embase support 1. Cette canalisation de sortie 22 permet également le remplissage du réservoir 2 d'eau lorsque celui-ci est vide.

Dans certaines variantes, le réservoir 2 peut être ouvert dans sa partie supérieure 21 pour permettre le remplissage du réservoir 2. Dans ce cas, le germoir peut comprendre un couvercle amovible destiné à coiffer ladite partie supérieure 21.

### Embase support

Comme indiqué précédemment, l'embase support 1 comprend un socle 11 dans lequel est agencé le nébuliseur 111, et une cuve de récupération 112 des éventuels excédents d'eaux usées s'écoulant du (ou des) logement(s) durant des opérations successives d'humidification des graines. La présence du nébuliseur 111 et de la cuve 112 dans le socle 11 de l'embase support 1 permet d'améliorer l'ergonomie du germoir.

De préférence, la cuve 112 est disposée sous le (ou les) logement(s) 4. Ceci permet de limiter la complexité de moyens d'acheminement des excédents d'eau entre le (ou les) logement(s) 4 et la cuve 112. Ceci permet en outre d'utiliser la gravité pour induire le déplacement des excédents d'eau entre le (ou les) logement(s) 4 et la cuve 112. Ainsi, aucune pompe n'est nécessaire pour acheminer l'eau du (ou des) logement(s) 4 vers la cuve 112. La cuve 112 peut consister en un tiroir extractible 1121 (coiffé d'une plaque 1122) pour permettre à l'utilisateur d'évacuer l'eau contenue dans celui-ci. Dans ce cas, l'embase support 1 peut comprendre un détecteur de présence (non représenté) pour détecter la présence ou l'absence de la cuve 112 dans l'embase support 1. Ce détecteur peut être électriquement connecté à un contrôleur (non représenté) pour générer une alarme (lumineuse et/ou sonore) et/ou désactiver le nébuliseur 111 lorsque la cuve 112 n'est pas positionnée sur l'embase support 1. Un capteur (non représenté) connecté au contrôleur peut également être agencé sur la cuve 112 pour détecter le niveau d'eau contenu dans la cuve 112 et émettre une alarme (lumineuse et/ou sonore) et/ou désactiver le nébuliseur 111 lorsque la cuve 112 est pleine. Le détecteur et le capteur associés au contrôleur permettent d'éviter tout risque de débordement d'eau usée.

Le nébuliseur 111 permet d'atomiser l'eau contenue dans le réservoir 2 pour générer une brume de particules d'eau permettant d'humidifier les graines. Il est positionné dans une chambre ménagée à l'intérieur du socle 11.

Le nébuliseur 111 comprend un bac 1111 incluant une paroi inférieure horizontale et quatre parois latérales verticales. Le bac 1111 est destiné à contenir une certaine quantité d'eau issue du réservoir 2 en vue de son atomisation.

Le nébuliseur 111 comprend également un élément à ultrasons 1112 incluant un générateur de puissance ultrasonore et une surface vibrante actionnée par les ultrasons (fréquence > 20000 Hz), telle qu'une pastille céramique. Cet élément à ultrasons 1112 est plongé dans le bac 1111 de sorte à être recouvert d'eau. La mise en vibration de l'élément à ultrasons 1112 permet de transformer l'eau contenue dans le bac 1111 en un nuage de particules d'eau extrêmement fines.

Le nébuliseur 111 comprend de plus un ventilateur 1113 agencé de sorte que le flux d'air généré par le ventilateur 1113 dirige la brume de particules d'eau vers le filtre. Ceci permet de faciliter l'acheminement de la brume de particules d'eau vers le filtre et sa distribution au(x) logement(s) 4 contenant les graines.

Le nébuliseur 111 peut également comprendre un senseur (non représenté) disposé dans le bac 1111 et adapté pour estimer la quantité d'eau contenue dans le bac 1111. Ce senseur est connecté électriquement au contrôleur pour le transfert d'un signal représentatif de la quantité d'eau estimée par le senseur. Si cette quantité d'eau estimée est inférieure à un seuil, alors le contrôleur commande la désactivation de l'élément à ultrasons 1112 pour éviter sa dégradation et limiter la quantité d'énergie consommée par le germoir. Sinon, le contrôleur autorise l'activation de l'élément à ultrasons 1112. Dans certaines variantes de réalisation, ce senseur peut être intégré à l'élément à ultrason 1112.

L'embase support 1 comporte en outre un pupitre de commande 113 équipé de clavier 1131 de saisie et/ou de programmation, d'un écran d'affichage 1132 et de moyens de signalisation (lumineux et/ou sonore) pour la génération d'une alarme. Le pupitre de commande 113 est connecté au contrôleur.

Le clavier 1131 peut être intégré à l'écran d'affichage 1132. Dans ce cas, l'écran d'affichage 1132 peut être un écran tactile intégrant des boutons virtuels formant le clavier.

En variante, le clavier 1131 peut être dissocié de l'écran d'affichage. Dans ce cas, le clavier 1131 est constitué de boutons poussoirs. Dans le mode de réalisation illustré sur les différentes figures, le clavier comprend une pluralité de boutons poussoirs disposés à la périphérie de l'écran. Ces boutons poussoirs permettent à l'utilisateur de programmer le germoir. Une couche souple de matériau étanche à l'eau (éventuellement un matériau polymère) peut être montée sur les boutons poussoirs de sorte à protéger ceux-ci contre les risques de projection d'eau susceptible de dégrader leur fonctionnement. Dans ce cas, la couche souple peut inclure une pluralité de dômes thermoformés, chaque dôme étant destiné à s'étendre au droit d'un bouton poussoir respectif. La présence de dôme permet de faciliter l'actionnement des boutons poussoirs par l'utilisateur.

Le mode de fonctionnement du pupitre de commande sera décrit plus en détails dans la suite.

### Logement

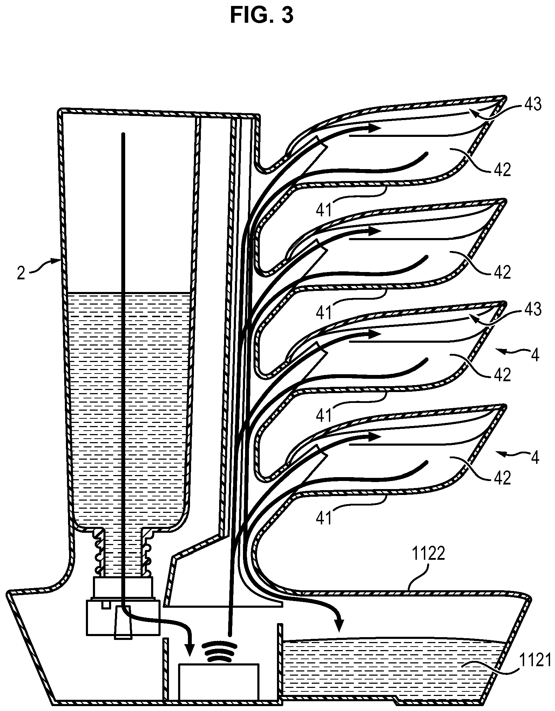

En référence à la figure 3, chaque logement 4 comprend un fond 41 et des parois latérales 42. Avantageusement, le fond 41 et les parois latérales 42 du logement 4 sont opaques à la lumière. Ceci permet d'empêcher la génération de chlorophylle par les graines.

De préférence, le fond 41 s'étend sensiblement dans un plan pour permettre une meilleure répartition des graines sur toute la surface du fond 41. On limite ainsi les agglomérations de graines dans le logement 4, et donc les risques de génération de moisissures.

Chaque logement 4 est associé à un capot 43 amovible également opaque. Le fait que le capot 43 soit amovible permet à un utilisateur de vérifier l'état de germination des graines contenues dans le logement 4.

Lorsque les graines ont germées, celles-ci occupent un volume plus important de sorte qu'elles appliquent des forces sur le capot 43 tendant à soulever celui-ci. Pour éviter les risques de soulèvement, chaque logement 4 peut comprendre des moyens de retenu du capot 43. Ces moyens de retenu peuvent comprendre :
- une jupe périphérique ménagée dans le capot 43, ladite jupe incluant un bourrelet sur sa face externe et étant destinée à être insérée entre les parois latérales du logement,
- une gorge ménagée sur les faces internes des parois latérales 42 du logement 4 au niveau de leurs extrémités opposées au fond 41.
Dans ce cas, le bourrelet du capot 43 est destiné coopérer par clipsage avec la gorge du logement 4.

Toutefois, l'ouverture et la fermeture répétée d'un capot peuvent induire une usure prématurée de la jupe périphérique et/ou de la gorge, ce qui diminue l'efficacité de la fermeture par clipsage.

C'est pourquoi en variante et comme illustré sur les figures, chaque logement 4 peut comprendre un rail de guidage 46 ménagé dans la partie supérieure de ses parois latérales 47. Ce rail de guidage 46 est destiné à recevoir les bords longitudinaux du capot 43 pour permettre le coulissement du capot 43 sur le logement 4 de sorte à ouvrir ou fermer celui-ci. La fermeture du capot 43 par coulissement sur le logement 4 grâce au rail de guidage 46 permet d'éviter tout risque de soulèvement du capot 43, quelle que soit l'intensité de la force appliquée par les graines germées sur le capot 43. L'utilisation d'un système de capot 43 coulissant permet en outre de limiter les risques d'écrasement des graines germées situées sur la périphérie du logement 4 lors de la fermeture du capot 43.

Avantageusement, chaque capot 43 peut comprendre une languette 45 s'étendant en saillie de l'un de ses bords transversaux. Cette languette 45 permet de faciliter la préhension du capot 43 pour induire son déplacement le long du rail de guidage 46, notamment lorsque le logement est fermé par le capot 43. Des picots peuvent être prévus sur la face supérieure de la languette (i.e. face opposée au logement). Ces picots permettent d'augmenter l'adhérence entre la languette et les doigts de l'utilisateur lors de la préhension de la languette par celui-ci.

Chaque logement 4 peut en outre être associé à un anneau amovible destiné à être positionné entre le logement 4 et le capot 43. L'anneau amovible définit un volume additionnel au-dessus du logement 4 pour permettre une augmentation de l'espace de croissance dédié aux graines contenues dans le logement 4.

Chaque logement 4 comprend de plus un port d'admission 44 consistant en une ouverture ménagée dans une paroi latérale 42 du logement 4. Ce port d'admission 44 est destiné à coopérer par emmanchement avec une conduite 31 du filtre pour l'acheminement de la brume de particules d'eau.

Chaque logement 4 peut également comprendre une lumière traversante agencée sur une de ses parois latérales, par exemple la paroi latérale42 opposée au port d'admission 44, pour améliorer la circulation de la brume de particules d'eau à l'intérieur du logement 4.

Chaque logement peut de plus comprendre un port d'échappement pour l'évacuation des éventuels excédant d'eau contenus dans le logement. Les ports d'échappement et d'admission peuvent être confondus et consister en un seul et même port. En variante, le port d'échappement et le port d'admission peuvent être distincts.

Dans tous les cas, le port d'échappement est raccordé à une gouttière d'échappement 32 des eaux usées du filtre.

Avantageusement, le fond 41 du logement 4 peut comprendre un boudin de retenue s'étendant transversalement à proximité des ports d'admission et d'échappement. Ce boudin de retenue permet de limiter les risques de chute de graines hors du logement à travers les ports d'admission et/ou d'échappement. Le boudin de retenue peut comprendre une fente pour l'acheminement des excédents d'eau vers le port d'échappement du logement 4. Le fond du logement peut également comprendre une pluralité de boudins formant un quadrillage sur le fond 41 du logement. Ce quadrillage de boudins permet une meilleure répartition des graines sur le fond 41 du logement 4.

### Filtre

Les particules d'eau générée par le nébuliseur 111 peuvent présenter des tailles variables comprises entre des tailles nanométriques et des tailles millimétriques.

Les particules d'eau de taille millimétrique ne garantissent pas une répartition adéquate de l'eau sur les graines. C'est pourquoi le dispositif comprend un filtre permettant de retenir les particules d'eau de tailles supérieures à 100 micromètres (de préférence supérieures à 5 micromètres, et encore plus préférentiellement supérieures à 100 nanomètres).

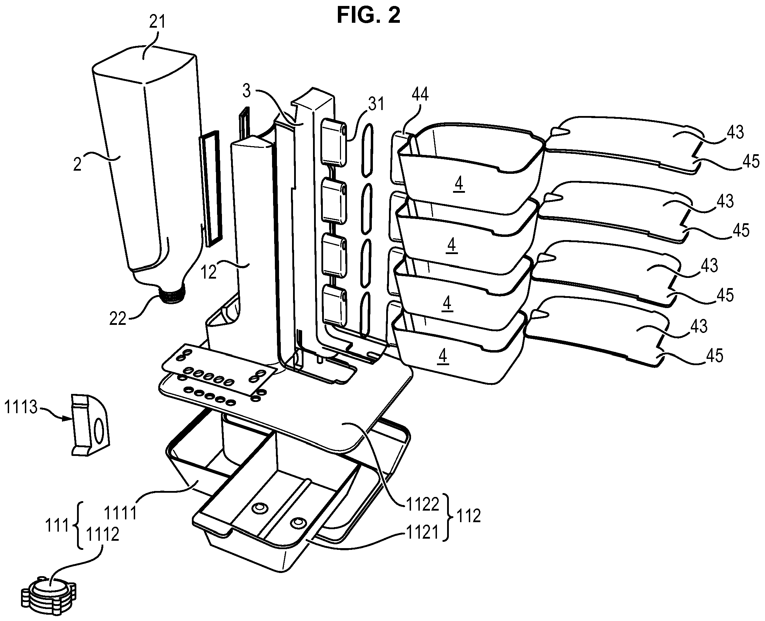

Dans le mode de réalisation illustré à la figure 2, le filtre comprend un canal (3) s'étendant verticalement au droit du nébuliseur 111. Le canal comprend quatre conduites 31 reliées chacune à un logement 4 respectif pour permettre l'acheminement des particules de brume de dimensions inférieures à 100 micromètres (de préférence inférieures à 5 micromètres, et encore plus préférentiellement inférieures à 100 nanomètres) vers les logements 4.

Avantageusement, la distance entre le nébuliseur 111 et la conduite 31 la plus proche du nébuliseur 111 peut être prévue suffisante pour que les particules d'eau de dimensions millimétriques ne pénètrent pas dans ladite conduite 31 la plus proche du nébuliseur 111. Ainsi, les particules d'eau de taille millimétrique projetées par le nébuliseur 111 lors de la génération de la brume retombent dans le bac 1111 sous l'effet de la gravité. Ceci permet - outre une meilleure répartition de l'eau sur les graines - de limiter la quantité d'eau consommée pour hydrater les graines.

L'homme du métier appréciera que cette distance peut varier notamment en fonction de la puissance du nébuliseur 111 et/ou du ventilateur 1113.

Les conduites 31 s'étendent parallèlement les unes aux autres, dans un plan vertical passant par un axe longitudinal du canal. Ainsi les différentes conduites s'étendent au-dessus les unes des autres, de sorte que les différents logements associés auxdites conduites s'étendent au-dessus les uns des autres. Ceci permet de limiter la surface occupée par le germoir. L'homme du métier appréciera que le système d'ouverture/fermeture par coulissement des capots permet dans ce cas à l'utilisateur de vérifier l'état d'avancement de la germination dans les différents logements 4 sans nécessiter le retrait de ceux-ci de leurs conduites 31 associées.

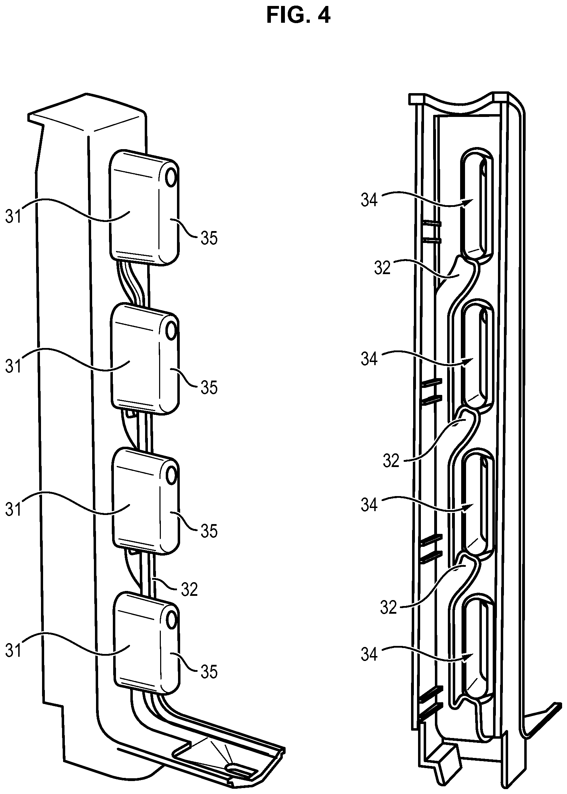

Les conduites 31 s'étendent en saillie du canal 3, perpendiculairement à celui-ci. Dans le mode de réalisation illustré sur les figures1, 2, 4, 5 et 6, chaque conduite 31 est un tube oblong comprenant une paroi latérale ovoïde en section. Plus précisément, la paroi latérale de chaque conduit est composée de deux cloisons planes parallèles s'étendant verticalement et de deux cloisons arrondies opposées entre les cloisons planes, ces cloisons arrondies présentant une forme en demi-cercle en section.

Chaque conduite 31 comprend un port d'entrée 34 reliée au canal et un port de sortie 35 destiné à être relié à un logement. Le port d'entrée 34 est une ouverture oblongue selon une direction parallèle à un axe longitudinal du canal. Le port de sortie 35 consiste quant à lui en une plaque incluant une ouverture circulaire dans sa partie supérieure (i.e. partie du port de sortie d'altitude la plus élevée). Ceci permet d'éviter l'écoulement de gouttes d'eau dans les logements 4. En effet, du fait de la saturation de l'air en particules d'eau, des gouttelettes d'eau peuvent se former par condensation sur les parois du canal et des conduites 31. Le fait que le port de sortie de chaque conduite 31 consiste en une plaque incluant une ouverture circulaire dans sa partie supérieure limite donc l'introduction de gouttelettes de taille millimétrique dans les logements 4.

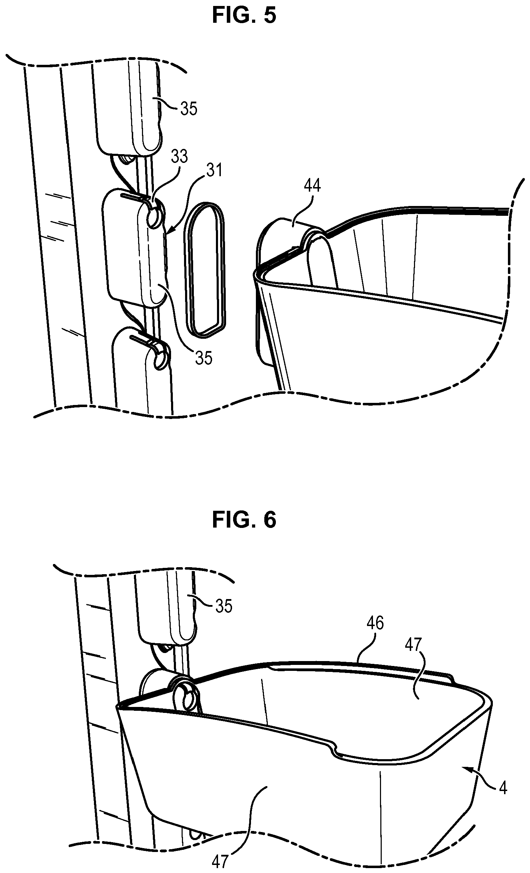

Dans le mode de réalisation illustré à la figure 5, chaque conduite 31 comprend une patte élastique 33 à retour de forme ménagée à proximité du port de sortie. Ceci permet de faciliter l'emmanchement du port d'admission 44 du logement 4 sur la conduite 31 du filtre, et garantit le maintien en position du logement sur la conduite 31.

Lorsqu'un logement 4 est désolidarisé d'une conduite 31, par exemple pour permettre à un utilisateur de consommer les graines contenues dans celui-ci, un bouchon peut être positionné sur la conduite 31 pour obstruer celle-ci afin de limiter la quantité d'eau consommée par le germoir pour faire germer les graines.

Avantageusement, le canal comprend également une gouttière 32 creusée sur sa face extérieure. Cette gouttière 32 permet de diriger l'excédent d'eau (ou eaux usées) s'écoulant du logement 4 vers la cuve de récupération 1121. Le fait que le canal comprenne une gouttière 32 creusée (plutôt qu'une canalisation tubulaire par exemple) permet de faciliter le nettoyage du germoir. En effet :
- autant les portions du germoir dans lesquelles circule l'eau issue du réservoir 2 peuvent être tubulaires puisque l'eau y circulant est propre,
- autant il est préférable que les portions du germoir dans lesquelles circulent l'eau issue du logement 4 (et donc chargée des particules impropres recouvrant les graines, etc.) présente la forme de rainures pour faciliter le nettoyage de celles-ci.

Toutefois, dans certains modes de réalisation qui ne sont pas selon l'invention, les gouttières peuvent être remplacées par des canalisations tubulaires pour des raisons esthétiques. Dans ce cas, ces canalisations peuvent comprendre une portion amovible pour faciliter leur nettoyage.

### Principe de fonctionnement du germoir

Le principe de fonctionnement du germoir est le suivant.

L'eau contenue dans le réservoir 2 est acheminée dans le bac 1111 à travers la canalisation 22 de sortie du réservoir 2. La quantité d'eau contenue dans le bac 1111 augmente jusqu'à recouvrir l'élément à ultrasons 1112.

Le capteur mesure une information représentative de la quantité d'eau contenue dans le bac 1111 et la transmet au contrôleur. Lorsque cette quantité d'eau est inférieure à une valeur seuil, le contrôleur interdit l'activation de l'élément à ultrasons 1112. Lorsque cette quantité d'eau dépasse une valeur seuil, le contrôleur autorise l'activation de l'élément à ultrasons 1112.

L'activation de l'élément à ultrasons 1112 induit la transformation en brume de l'eau contenue dans le bac 1111. Le flux d'air généré par le ventilateur 1113 permet de déplacer la brume de particules d'eau vers le filtre 3.

Le filtre sépare les particules d'eau en fonction de leurs dimensions. Plus précisément, le filtre retient les particules de dimensions supérieures à 100 micromètres (de préférence supérieures à 5 micromètres, et encore plus préférentiellement supérieures à 100 nanomètres).

Les particules d'eau de dimensions inférieures à 100 micromètres (de préférence inférieures à 5 micromètres, et encore plus préférentiellement inférieures à 100 nanomètres) sont acheminées à travers le filtre (i.e. le canal) vers les différents conduits 31 dans lesquels sont emmanchés les logements 4 contenant les graines.

Pour chaque logement 4, la brume de particules d'eau se concentre dans le volume définit par le fond 41, les parois latérales 42 et le capot 43. La brume de particules se dépose sur les graines et permet ainsi de les hydrater en vue de leur germination.

L'excédent d'eau contenu dans chaque logement 4 circule vers le port d'échappement de liquide et s'écoule le long des gouttières creusées 32 dans la paroi externe du filtre 3 jusqu'à la cuve de récupération 112.

Lorsque la quantité d'eau contenue dans la cuve 112 dépasse une valeur donnée, le capteur émet un signal vers le contrôleur. Le contrôleur émet alors une alarme (lumineuse et/ou sonore) et/ou désactive le nébuliseur 111 pour éviter un débordement de la cuve de récupération d'eau 112. Si la quantité d'eau contenue dans la cuve 112 ne dépasse pas la valeur seuil, le contrôleur autorise l'activation du nébuliseur 111 en fonction d'un cycle de germination prédéfini qui va maintenant être décrit en référence au pupitre de commande 113.

### Pupitre de commande

On va maintenant décrire plus en détail des aspects de l'invention associés au pupitre de commande 113 dans le cas d'un germoir comprenant quatre conduits 31 destinés à recevoir quatre logements 4 comprenant des graines à faire germer.

La durée de germination des graines contenues dans chacun des logements 4 peut varier en fonction de la nature desdites graines.

Dans une première étape, l'utilisateur remplit un logement 4 avec le type de graine qu'il souhaite faire germer et l'emmanche sur l'un des conduits 31 du cana (3) du filtre. L'utilisateur actionne ensuite différents boutons lui permettant de paramétrer la nouvelle culture. L'écran d'affichage 1132 peut avantageusement afficher un message sanitaire informant l'utilisateur qu'un cycle de lavage du germoir doit être mis en oeuvre périodiquement. Une fois la phase de paramétrage terminée, un cycle de germination est mis en oeuvre par le contrôleur. Ce cycle de germination est préprogrammé dans une mémoire du germoir associée au contrôleur. Le cycle de germination comprend des périodes d'activation et de désactivation du nébuliseur 111 du germoir.

Par exemple, au cours de la première journée, le nébuliseur 111 est activé pendant une durée quarante minutes et désactivé pendant une durée de vingt minutes, les étapes d'activation et de désactivation étant répétées durant vingt-quatre heures. Au cours des journées suivantes, le nébuliseur 111 est activé pendant une durée de vingt minutes et désactivé pendant une durée de quarante minutes.

Le fait de commander l'activation et la désactivation du nébuliseur 111 de manière périodique permet de limiter la consommation d'eau nécessaire à la germination des graines.

Le lecteur aura compris que de nombreuses modifications peuvent être apportées à la présente invention sans sortir matériellement des nouveaux enseignements présentés ici. Par exemple, dans la description qui précède, le pupitre de contrôle comprenait un écran d'affichage et un clavier de saisie. En variante, le pupitre de contrôle pourrait comporter un écran tactile permettant à la fois l'affichage d'information et la saisie de données.

Par ailleurs, le germoir pourrait comprendre des moyens de communication sans fil pour permettre le pilotage du germoir à distance, par exemple en utilisant un terminal distant tel qu'un terminal de poche (ou « Smartphone » en anglais) ou tout autre équipement électronique communicant connu de l'homme du métier.

Enfin, dans les différents modes de réalisation décrits ci-dessus, les conduits étaient décrits comme s'étendant en saillie vers l'extérieur du filtre, les logements venant s'emmancher à l'extérieur desdits conduits. En variante, les conduits pourraient s'étendre en saillie vers l'intérieur du filtre, les logements venant s'emmancher à l'intérieur desdits conduits.

## Revendications

1. Dispositif de germination de graines comportant un réservoir (2) destiné à recevoir de l'eau pour l'humidification des graines et au moins un logement (4) destiné à recevoir des graines, **caractérisé en ce que** le dispositif comprend en outre :
- un nébuliseur (111) pour générer une brume de particules d'eau à partir de l'eau contenue dans le réservoir, et
- un filtre (3) entre le nébuliseur (111) et le logement (4) pour retenir les particules d'eau dont les dimensions particulaires sont supérieures à 100 micromètres, le filtre comportant un canal (3) s'étendant verticalement et au moins une conduite (31) reliée au logement (4) pour permettre l'acheminement des particules de brume de dimensions inférieures à 100 micromètres vers le logement (4), le canal comprenant une gouttière creusée (32) sur sa face externe pour l'évacuation d'eaux usées du logement (4).

2. Dispositif de germination selon la revendication 1, dans lequel le nébuliseur (111) comprend un bac (1111) en aval du réservoir (2) et un élément à ultrasons (1112) s'étendant dans le bac (1111), le réservoir (2) et le bac (1111) étant connectés par une canalisation de sortie (22).

3. Dispositif de germination selon l'une quelconque des revendications 1 ou 2, dans lequel le nébuliseur (111) comprend un ventilateur (1113).

4. Dispositif de germination selon la revendication 1, dans lequel le canal est disposé au droit du nébuliseur (111).

5. Dispositif de germination selon l'une des revendications 1 à 4, dans lequel chaque conduite (31) s'étend en saillie du canal en s'éloignant du nébuliseur (111).

6. Dispositif de germination selon l'une quelconque des revendications précédentes, dans lequel chaque conduite (31) est de forme tubulaire oblongue.

7. Dispositif selon la revendication 1, lequel comprend en outre une cuve de récupération (112) des eaux usées, ladite cuve (112) étant connectée à la gouttière (32).

8. Dispositif de germination selon l'une quelconque des revendications précédentes, dans lequel chaque logement (4) comporte un fond (41) et des parois latérales (42) opaques, chaque logement (4) étant associé à un capot amovible (43) opaque destiné à coiffer ledit logement (4).

9. Dispositif de germination selon la revendication précédente, dans lequel le fond (41) de chaque logement (4) s'étend sensiblement dans un plan, par exemple horizontal.

10. Dispositif de germination selon l'une quelconque des revendications précédentes, lequel comprend une pluralité de logements (4) disposés au droit les uns des autres.

11. Dispositif de germination selon l'une des revendications précédentes, lequel comprend en outre un pupitre de commande pour le paramétrage d'un cycle de germination.

## Patentansprüche

1. Saat-Keimungsvorrichtung, aufweisend einen Vorratsbehälter (2), der zum Empfang von Wasser für die Befeuchtung der Saat bestimmt ist, und mindestens eine Aufnahme (4), die zum Empfang der Saat bestimmt ist, **dadurch gekennzeichnet, dass** die Vorrichtung ferner umfasst:
- einen Zerstäuber (111), um aus dem in dem Vorratsbehälter enthaltenen Wasser einen Wasserpartikelnebel zu erzeugen, und
- einen Filter (3) zwischen dem Zerstäuber (111) und der Aufnahme (4), um die Wasserpartikel zurückzuhalten, deren Abmessungen größer als 100 Mikrometer sind, wobei der Filter einen Kanal (3) aufweist, der sich vertikal erstreckt, und mindestens eine mit der Aufnahme (4) verbundene Leitung (31), um die Beförderung der Nebelpartikel mit kleineren Abmessungen als 100 Mikrometer zu der Aufnahme (4) zu erlauben, wobei der Kanal eine auf seiner Außenfläche ausgebildete Rinne (32) für die Ableitung von Abwasser aus der Aufnahme (4) umfasst.

2. Keimungsvorrichtung nach Anspruch 1, wobei der Zerstäuber (111) einen dem Vorratsbehälter (2) nachgelagerten Behälter (1111) und ein Ultraschallelement (1112) umfasst, welches sich in dem Behälter (1111) erstreckt, wobei der Vorratsbehälter (2) und der Behälter (1111) durch eine Ausgangskanalisation (22) angeschlossen sind.

3. Keimungsvorrichtung nach einem der Ansprüche 1 oder 2, wobei der Zerstäuber (111) einen Ventilator (1113) umfasst.

4. Keimungsvorrichtung nach Anspruch 1, wobei der Kanal senkrecht zum Zerstäuber (111) angeordnet ist.

5. Keimungsvorrichtung nach einem der Ansprüche 1 bis 4, wobei sich jede Leitung (31) hervorstehend aus dem Kanal erstreckt, indem sie sich vom Zerstäuber (111) entfernt.

6. Keimungsvorrichtung nach einem der vorangehenden Ansprüche, wobei jede Leitung (31) länglich rohrförmig ist.

7. Vorrichtung nach Anspruch 1, die ferner ein Auffangbecken (112) des Abwassers umfasst, wobei das Becken (112) an die Rinne (32) angeschlossen ist.

8. Keimungsvorrichtung nach einem der vorangehenden Ansprüche, wobei jede Aufnahme (4) einen Boden (41) und Seitenwände (42) umfasst, die opak sind, wobei jede Aufnahme (4) einer opaken beweglichen Abdeckung (43) zugeordnet ist, die zum Bedecken der Aufnahme (4) bestimmt ist.

9. Keimungsvorrichtung nach vorangehendem Anspruch, wobei sich der Boden (41) jeder Aufnahme (4) etwa in einer beispielsweise horizontalen Ebene erstreckt.

10. Keimungsvorrichtung nach einem der vorangehenden Ansprüche, die eine Vielzahl von Aufnahmen (4) umfasst, die senkrecht zueinander angeordnet sind.

11. Keimungsvorrichtung nach einem der vorangehenden Ansprüche, die ferner ein Steuerpult für die Parametrierung eines Keimungszyklus umfasst.

## Claims

1. A seed germination device comprising a reservoir (2) designed to receive water for moistening seeds and at least a housing (4) designed to receive seeds, **characterized in that** the device further comprises:
- a nebulizer (111) for generating a mist of water particles from the water contained in the reservoir, and
- a filter (3) between the nebulizer (111) and the housing (4) for retaining the particles of water the particle size of which is greater than 100 micrometers, the filter comprising a channel (3), extending vertically and at least one duct (31) connected to the housing (4) in order to allow conveying the mist particles of dimensions less than 100 micrometers to the housing (4), the channel comprising an excavated gutter (32) on its outer face for the discharge of wastewater from the housing (4).

2. The germination device according to claim 1, wherein the nebulizer (111) comprises a tank (1111) downstream of the reservoir (2) and an ultrasound element (1112) extending into the tank (1111), the reservoir (2) and the tank (1111) being connected by an outlet pipe (22).

3. The germination device according to any one of claims 1 or 2, wherein the nebulizer (111) comprises a fan (1113).

4. The germination device according to claim 1, wherein the channel is arranged perpendicular to the nebulizer (111).

5. The germination device according to one of claims 1 to 4, wherein each duct (31) extends protruding from the channel away from the nebulizer (111).

6. The germination device according to any one of the preceding claims, wherein each duct (31) has an oblong tubular shape.

7. The device according to claim 1, which further comprises a vessel (112) for collecting wastewater, said vessel (112) being connected to the gutter (32).

8. The germination device according to any one of the preceding claims, wherein each housing (4) comprises a bottom (41) and opaque side walls (42), each housing (4) being associated with an opaque removable cap (43) designed to cover said housing (4).

9. The germination device according to the preceding claim, wherein the bottom (41) of each housing (4) extends substantially in a plane, for example horizontal plane.

10. The germination device according to any one of the preceding claims, which comprises a plurality of housings (4) arranged perpendicular to each other.

11. The germination device according to one of the preceding claims, which further comprises a control panel for the parameterization of a germination cycle.
